# EUROPEAN PATENT APPLICATION

(11) **EP 4 454 753 A1**
(43) Date of publication of application: **30.10.2024**
(21) Application number: 22910262.9
(22) Date of filing: 29.11.2022
(51) Int. Cl.: B01J 20/22, B01J 20/289, B01D 15/08, B01J 20/32, G01N 1/40, B01L 3/00

(54) **GLASS CONTAINER COATED INTERNALLY WITH A METAL-ORGANIC FRAMEWORK**

(30) Priority: 23.12.2021 ES 202131195
(71) Applicant: Universidad de la Laguna, OTRI, 38200 La Laguna, Tenerife (ES)
(72) Inventor: PASÁN GARCÍA, Jorge, 38004 Santa Cruz de Tenerife (ES); TAIMA MANCERA, Ivan, 38201 San Cristóbal de La Laguna (ES); GUTIERREZ SERPA, Adrián, 38111 Santa Cruz de Tenerife (ES); NAPOLITANO TABARES, Patricia, 38003 Santa Cruz de Tenerife (ES); PINO ESTÉVEZ, Verónica, 38003 Santa Cruz de Tenerife (ES); DIAZ DIAZ, David, 38419 Los Realejos (ES); AYALA DÍAZ, Juan, 38208 SAN CRITÓBAL DE LA LAGUNA (ES)
(74) Representative: Ibarra Garcia, Isabel
(86) International application number: PCT/ES2022/070767
(87) International publication number: WO 2023/118628

(57) **Abstract**

The present invention relates to a device consisting of a glass container, the inner walls of which have been modified after successive activation, silanisation and amidation reactions to house a porous crystalline coating. Said coating, which has the atomic sequence -Si-O-R-M-MOF, is covalently bonded to the inner wall of the container in an inverted radial manner, where R may be A) -Si-(CH₂)₃-NH-CH(=O)-(C₆H₄)-COO-; B) -Si-(CH₂)ₙ-NH-CH(=O)-(CH₂)₂-(C₂HN₃)-(CH₂)ₙ-(C₆H₄)-COO-; C) -Si-(CH₂)ₙ-O-CH₂-CH(-OH)-CH₂-NH-(CH₂)ₙ-(C₆H₄)-COO-; D) -Si-(CH₂)ₙ-S-(CH₂)₂-(CH₂)ₙ-(C₆H₄)-COO-, and M is a metal dependent on the type of MOF. The container can be used for the extraction and pre-concentration of analytes present in samples of different natures, from environmental to biological. The invention also relates to the use thereof for dosing medicines or for colouring or flavouring beverages.

## Description

### FIELD OF THE ART

The present invention is comprised in the field of microextraction devices for chemical analysis, for dosing medicines, and for the agri-food industry.

### BACKGROUND OF THE INVENTION

Metal-organic frameworks (MOFs) are crystalline materials with an ordered three-dimensional structure that are formed by the combination of metal clusters or ions with organic ligands by means of coordination bonds as disclosed in document ES2356130T3. Among their many properties, having the largest surface areas known to date, uniform porosity, and high synthetic versatility (Science 2013, 341, 1230444) should be highlighted. All their characteristics make them sorbent materials of great interest for the development of analytical microextraction strategies.

Thin film microextraction (TFME) is an analytical extraction and pre-concentration technique which is based on the use of devices made up of a thin layer of extraction material coating a solid support (such as paper or fabric) or any membrane without solid support. This technique is considered as an alternative geometry to solid phase microextraction (SPME) proposed by professor Pawliszyn in the late 1980s, ES2056644T3, such that the surface/volume ratio of the final device is greater, with the subsequent increase in analytical sensitivity without any increase in extraction time.

In 2001, Wilcockson et al. (Environ. Sci. Technol. 2001, 35, 1425-1431) published the first article on TFME in which the use of 5 ethylene vinyl acetate (EVA)-coated glass sheets exposed to the headspace of a container was described. The TFME device was applied in the extraction of organic compounds from biological tissues. However, it was not until 2003 when Bruheim et al. (Anal. Chem. 2003, 75, 1002-1010) evaluated the advantages offered by TFME with respect to SPME. They thereby presented a device with a polydimethylsiloxane (PDMS) membrane wound on a stainless steel rod. The results for the analysis of polycyclic aromatic hydrocarbons (PAHs) were compared with those obtained in SPME with a 100 µm-thick PDMS fibre. It was demonstrated that TFME in fact works as an alternative geometry to SPME for obtaining higher extraction efficacies without an increase in extraction time. Since then, various applications involving the use of all types of TFME devices have emerged. Some related examples are listed below:
Document US5827944A describes a device for preparing samples which consists of a container in the form of an Eppendorf-like conical bottom vial, the bottom or cap of which may be coated with a stationary phase. The device works such that the sample is poured into the vial, the compounds present in said sample migrate to the stationary phase and are introduced, by means of thermal desorption and aspiration, in the gas chromatograph to carry out the analysis.

The article Chem. Cent. J. 2008, 2, 8 describes a glass vial coated with PDMS (with a thickness between 3 and 12 µm) which is prepared by dispersing the polymer in a commercial adhesive to ensure its deposition. For the extraction and pre-concentration of 7 PAHs, the vial is filled with the soil sample and left under stirring for 5 days.

The article J. Chromatogr. A 2009, 1216, 7553-7557 describes for the first time the "vial wall sorptive extraction" technique for extraction and pre-concentration, abbreviated as VWSE. To manufacture the device, PDMS is first synthesised with SILPOT 184 and a cross-linking agent in small 1.5 and 2 mL vials. Three format alternatives are proposed: 1) placing PDMS precursors in the vial and carrying out polymerization reaction; 2) inserting a V-shaped object before the reaction; 3) rotating the vial horizontally while the reaction takes place. The application was for the determination of progesterone in human serum.

In the article Eur. J. Pharm. Biopharm. 2013, 85, 756-764, borosilicate vials are coated with dendritic polyglycerol-based polymers modified with triethoxysilyl. The surface is activated with a piranha solution and an ethanolic solution of the polymer is added after washing with water. The devices are used to control the absorption of unspecific substances in a test intended for determining the concentration of a specific protein.

Document ES2799351 describes a SPME device with a metal-organic framework, specifically CIM-80(AI), stationary phase on a nickel/titanium support attached by means of APTES. Said device was applied for the extraction and pre-concentration of PAHs in water, improving the extraction yield of available commercial fibres.

Document WO2021/003316 discloses a thin PDMS coating for an extraction vial. In the TFME method, contaminants are absorbed or adsorbed by the PDMS coating. The supernatant is discarded, and the volatile analytes present in the headspace are then trapped in the coating by increasing the temperature. In this way, transfer to the analysis equipment, which is a gas chromatograph coupled to a mass spectrometer, is facilitated.

The article Anal. Chim. Acta 2021, 1152, 338226 uses a sampling bottle, the inner walls of which have been coated with PDMS and divinylbenzene (DVB), as a device for the extraction and pre-concentration of BTEX in water samples. The device is completely portable and can be coupled with the equipment for on-site analysis.

Like click chemistry in any of the variants thereof, the use of silane derivatives for surface functionalisation is a known and widely used technique. Some of the most important documents in this regard are:
The article Chem. Mater. 2003, 15, 1132-1139 set a precedent for manufacturing amino-functionalised silica surfaces with defined and uniform reactivity.

Patent CN105694051A presents a polymer membrane prepared by means of the cross-linking of a MOF using thiol-alkene type click reactions. The membrane thus manufactured is applicable in the separation of substances.

Patent US8148287B2 presents a method for attaching catalysts to a siliceous mesocellular foamy surface by means of azide-alkyne type click reactions.

The article Anal. Chim. Acta 2019, 1060, 103-113 proposes the functionalisation of flat glass supports to anchor oligonucleotides and proteins by means of epoxide opening reactions with thiol group and alkene-thiol reactions, both under the name click chemistry.

The article Polymer 2014, 3330-3338 shows how silicon wafers and glass slides can be functionalised with ionic liquid polymers through alkene-thiol and alkyne-azide reactions.

The article Anal. Chem. 2007, 79, 1661-1667 also proposes the functionalisation of glass slides with different organic polymers by means of alkyne-azide reactions.

The article Trends Anal. Chem. 2019, 118, 556-573 reviews the literature on the use of the click chemistry for the preparation of new sorbents and stationary phases for extraction and chromatography. Click chemistry type reactions have been applied on MOFs mainly to perform post-synthetic modifications or to functionalise same with polymers or biomolecules.

### DESCRIPTION OF THE INVENTION

The present invention relates to a device formed by a glass container, the inner walls of which have been modified after successive activation, silanisation and amidation reactions to house a porous crystalline coating. Said coating, which has the atomic sequence -Si-O-R-M-MOF, is covalently bonded to the inner wall of the container in an inverted radial manner, R being an intermediate compound defined below and M a metal dependent on the metal-organic framework (MOF).

The anchoring of the MOF to the container can be performed by four different methods, although all of them are based on the functionalisation of a silanol that is covalently attached to the glass surface.

This invention uses for first time the use of silane derivatives and click chemistry for the functionalisation of the glass surface which allows the anchoring of metal-organic frameworks.

This variety of anchorings is performed as a result of the following intermediate compounds:

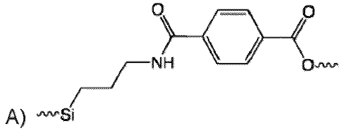

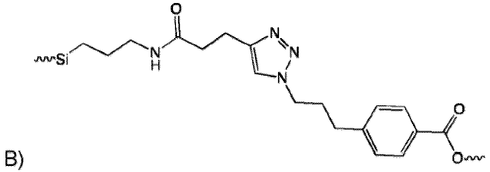

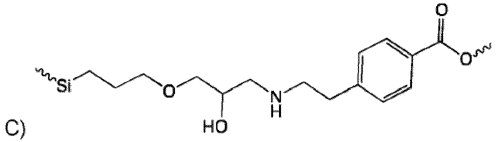

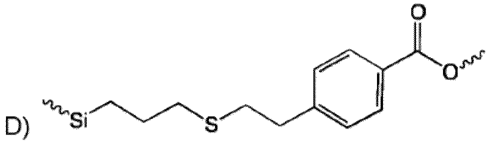

M can be a metal from the following Zr, Ti, Al, Cr, Fe, Mn, Co, Ni, Cu, Zn, Mg, Ca, Sc, Sr which is determined by the type of MOF in the coating. The MOF can be any of those mentioned below, preferably from, but not limited to, UiO-66(Zr), UiO-66(Zr)-NH₂, UiO-66(Zr)-NO₂, MIL-101(Fe), MIL-101(Fe)-NH₂, MIL-100(Cr), CIM-80(AI), PCN-250(Fe₂Co), PCN-250(Fe), UiO-67, HKUST-1, DUT-52, DUT-67, as well as modifications thereof with terminal amino or azido groups. Furthermore, any other MOF thus named is not excluded since laboratory results indicate that the proposed invention works regardless of the selected MOF and is generally applicable.

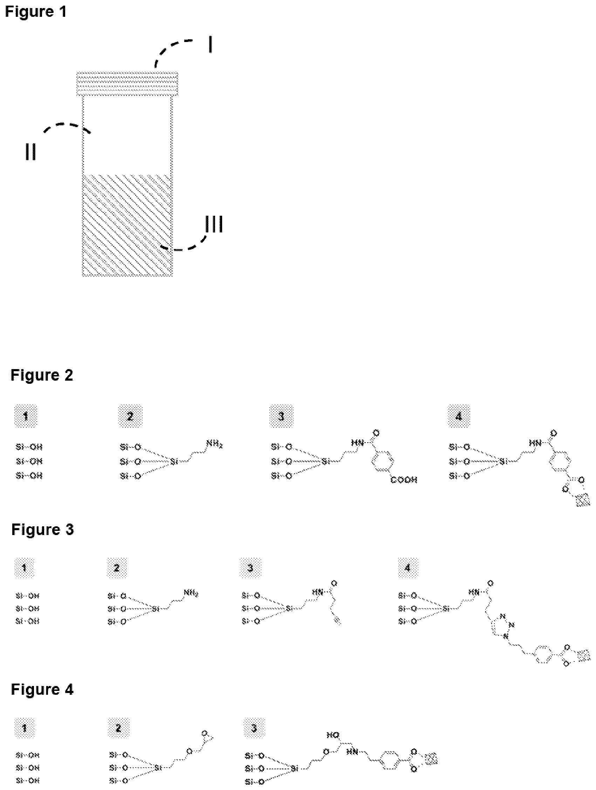

The basis of the methodology of this invention is the use of click chemistry for covalently attaching a MOF to a glass surface. In that sense, the invention arrives at intermediate compound A) after a carboxylic functionalisation with terephthaloyl chloride for the formation of an amide from APTES (3-aminopropyltriethoxysilane) initially bonded to the glass surface and the subsequent growth of the MOF (Figure 2).

Intermediate compound B) is obtained after an alkyne-azide click reaction preferably attaching N-(3-(trimethoxysilyl)propyl)propiolamide (AMIPTES) with a MOF post-synthetically modified with 4-azidopropylbenzoic acid, but it does not limit the use of the version to various steps with N-hydroxysuccinimide, 1-ethyl-3(3-dimethylaminopropyl)carbodiimide, 4-pentinoic acid (Figure 3).

Intermediate compound C) results from an epoxide opening click reaction using GLYMO (3-glycidyloxypropyltrimethoxysilane) and a MOF post-synthetically modified with 4-aminoethylbenzoic acid (Figure 4).

Intermediate compound D) is obtained after the thiol-alkene click reaction using 3-mercaptopropyltriethoxysilane and a MOF post-synthetically modified with 4-vinylbenzoic acid.

The preparation method of the present invention provides covalent bonding of the metal-organic framework (the sorbent material) to the glass substrate, preventing detachments and degradation from use. The modification of the surface is an inverted radial manner, starting in the glass of the container and adding the material to the interior of the container.

The glass vials are used as a TFME device for preparing samples to perform qualitative or quantitative analysis of trace components in samples of environmental origin, biological origin, etc. The container is capable of extracting and pre-concentrating the analytes of interest of a sample (water, urine, saliva, etc.) for subsequent analysis either by means of liquid chromatography (after liquid desorption with a suitable solvent, compatible with the measuring equipment) or by means of gas chromatography (by means of thermal desorption).

Using the device of the invention, the sample treatment process is much simpler compared to any of the current methods, given that the container collects the sample, extracts it, and pre-concentrates it in a single step, with the desorption of the analytes being very simple and highly compatible with conventional laboratory analysis equipment. Since the devices can be manufactured with any MOF, it can be selected on demand for the specific application to which the container will be dedicated.

Although there is no commercial device similar to that presented herein, the devices for the pre-concentration and pre-treatment of samples with most similarities are those based on solid phase microextraction (SPME) or thin film microextraction (TFME). The comparisons of the invention with these devices can lead to errors, given that the use is completely different. In commercial SPME and TFME devices, the device is submerged in the sample or is used in a headspace and the analytes are then eluted with a solvent compatible with the chromatographic method or are injected directly in the gas chromatograph. In the device of the invention, it is the sample which is added to the device.

The extraction method disclosed in the present invention is extremely simple, improving any other prior device, given that the same container allows adding the sample and the desorption solvent, without requiring complex intermediate steps.

Furthermore, an alternative use of the invention for dosing medicines or colouring and flavouring beverages is proposed.

Dosing of medicines. The container with the inner coating of sorbent material allows storing a substance to then return it to the medium in specific dosages. In that sense, the porous material could be loaded with a medicine by means of the adsorption of an ethanolic solution. The empty container, but with the wall already loaded with the medicine, is used by pouring water therein, thus starting the desorption of the medicine in a specific given rate for that combination of medicine/MOF which allows dosed administration in a relatively simple and visually acceptable presentation for those cases in which rejection of the medication is present.

Colouring or flavouring of beverages. Following the same method as for the case of the dosing of medicines, the container allows loading colouring or flavouring molecules in the metal-organic framework. In that sense, during the presentation and upon filling the container with the beverage, the desorption of the molecule trapped in the porous material occurs, leading to the colouration, flavouring, or aromatisation of the beverage.

### BRIEF DESCRIPTION OF THE DRAWINGS

Figures are included for the purpose of clarifying the most representative parts of this invention. The examples shown below are merely illustrative, but in no case limit the invention:
Figure 1 shows general diagram of the device. I = screw cap, II = headspace not coated, III = inner wall coated with MOF.
Figure 2 shows a representative diagram of the chemical reactions for the first and last embodiments of the invention. Step 1: surface activation, step 2: silanisation reaction with terminal amino groups, step 3: reaction to form the amide and to expose terminal carboxylic groups, step 4: solvothermal MOF growth.
Figure 3 shows a representative diagram of the second embodiment of the invention. Step 1: surface activation, step 2: silanisation reaction with terminal amino groups, step 3: reaction to form an amide and to expose terminal alkyne groups on the surface, step 4: alkyne-azide click reaction using MOFs with terminal azide groups.
Figure 4 shows a representative diagram of the third embodiment of the invention. Step 1: surface activation, step 2: silanisation reaction with terminal epoxide groups, step 3: epoxide opening reaction using MOFs with terminal amino groups.

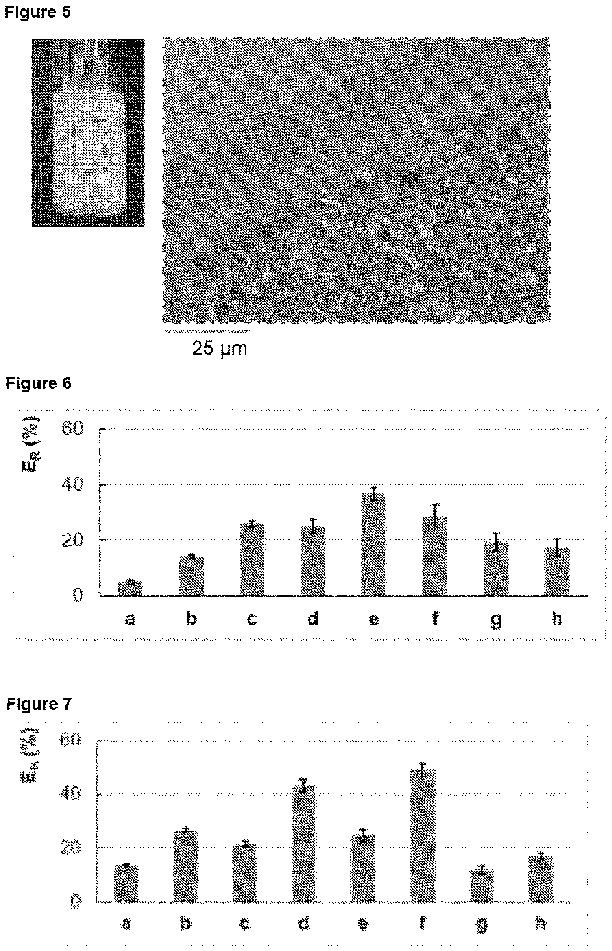

Figure 5 shows a scanning electron microscopy (SEM) image of the cross-section of a glass container coated with MOF MIL-101 (Fe).
Figure 6 shows the extraction efficiency of the device with the MOF MIL-101(Fe) coating manufactured according to the first embodiment of the invention using: carbamazepine (a), 4-cumylphenol (b), benzophenone-3 (c), triclosan (d), 4-tert-octilphenol (e), 4-octilphenol (f), chrysene (g), and indeno[1,2,3-cd]pyrene (h).
Figure 7 shows the extraction efficiency of the device with the MOF UiO-66(Zr) coating manufactured following the method described in the fourth embodiment using: carbamazepine (a), 4-cumylphenol (b), benzophenone-3 (c), triclosan (d), 4-tert-octilphenol (e), 4-octilphenol (f), chrysene (g), and indeno[1,2,3-cd]pyrene (h).

### EMBODIMENT OF THE INVENTION

Some illustrative examples that, however, in no way seek to limit this invention are described below.

In a first embodiment of the invention, the stationary phase having an inverted radial atomic sequence, container-Si-O-Si-(CH₂)₃-NH-C(=O)-(C₆H₄)-COO-Fe-MOF, is obtained by means of four main steps: 1) silica surface activation with an alkaline solution, 2) silanisation reaction to generate terminal 3-aminopropyl groups, 3) amidation reaction to generate terminal carboxyl groups, and 4) MOF MIL-101(Fe) growth by means of solvothermal synthesis (Figure2).

The method performed inside the glass container is described below:
1. Container activation is performed by adding a 1 M aqueous NaOH solution for 24 hours at 25ºC, and after appropriate washing with water, a second 1 M HCl solution is added for 30 minutes at 25ºC.
2. Container glass silanisation is performed by adding 3-aminopropyltriethoxysilane (APTES) that is left to act for 24 hours at 60ºC.
3. The amidation reaction to produce terminal carboxyl groups is carried out by adding to the container, in an inert atmosphere, a triethylamine solution in tetrahydrofuran (THF) and then another 0.04 M terephthaloyl chloride solution in THF. The container is closed and kept at 60ºC for 24 hours until the reaction occurs completely.
4. Finally, the incorporation of MOF MIL-101(Fe) is performed by adding a solution in dimethylformamide of 0.1 M iron (III) chloride and 0.05 M terephthalic acid to the container. The container is closed and kept at 110ºC for 20 hours until the MOF has grown on the inner surface of the container.

The container thus prepared has a uniform MOF layer of about 5 µm on the inner surface of the container (Figure 5). Before starting to use said container, it is convenient to perform washing with dimethylformamide and with ethanol/acetone, and to perform low-pressure heating on the open container to remove possible DMF residues or reagents that remain trapped in the pores of the material.

In a second embodiment of the invention, the stationary phase having an inverted radial atomic sequence, container-Si-O-Si-(CH₂)₃-NH-C(=O)-(CH₂)₂-(C₂N₃H)-(CH₂)₃-(C₆H₄)-COO-Zr-MOF, is obtained by means of four steps: 1) silica surface activation with an alkaline solution, 2) silanisation reaction to generate terminal 3-aminopropyl groups, 3) amidation reaction to generate terminal alkyne groups, 4) post-synthetic modification of the MOF for incorporating terminal azide groups and alkyne-azide cycloaddition reaction for anchoring the MOF (Figure 3).

The method performed inside the glass container is described below:
1. Container activation is performed by adding a 1 M aqueous NaOH solution for 24 hours at 25ºC, and after appropriate washing with water, a second 1 M HCl solution is added for 30 minutes at 25ºC.
2. Container glass silanisation is performed by adding 3-aminopropyltriethoxysilane (APTES) that is left to act for 24 hours at 60ºC.
3. The amidation reaction to produce terminal alkyne groups is carried out by adding in the container an aqueous N-hydroxysuccinimide solution (0.002 M), 1-ethyl-3(3-dimethylaminopropyl)carbodiimide (0.124 M), and 4-pentinoic acid (0.071 M). The container is closed and kept at 25ºC for 24 hours until the reaction occurs completely.
4. Post-synthetic modification of MOF UiO-66 is performed by submerging same in a DMF solution containing 4-azidopropylbenzoic acid for 24 hours.
5. The alkyne-azide cycloaddition reaction is performed by adding an aqueous solution of CuSO_{4.} 5H₂O (0.06 M) and sodium ascorbate (0.12 M) and then a dispersion of MOF UiO-66 in water and acetonitrile (50:50, v/v). The container is closed and the reaction is left to occur at 25ºC for 24 hours.

The container thus prepared has a uniform MOF layer of about 0.5 µm on the inner surface of the container. Before starting to use said container, it is convenient to perform washing with ethanol/acetone, and to perform heating at reduced pressure on the open container to remove possible solvent residues or reagents that remain trapped in the pores of the MOF.

In a third embodiment of the invention (Figure 4), the stationary phase having an inverted radial atomic sequence, container-Si-O-Si-(CH₂)₃-O-CH₂-CH(-OH)-CH₂-NH-(CH₂)₂-(C₆H₄)-COO-Zr-MOF, is obtained by means of three steps: 1) silica surface activation with an alkaline solution, 2) silanisation reaction to generate terminal 3-glycidyloxypropyl groups, 3) post-synthetic modification of the MOF for surface functionalisation with terminal amino groups and ring opening reaction of the epoxide groups for anchoring the MOF.

The method performed inside the glass container is described below:
1. Container activation is performed by adding a 1 M aqueous NaOH solution for 24 hours at 25ºC, and after appropriate washing with water, a second 1 M HCl solution is added for 30 minutes at 25ºC.
2. Container glass silanisation is performed by adding 3-glycidyloxypropyltrimethoxysilane (GLYMO) that is left to act for 24 hours at 60ºC.
3. Post-synthetic modification of the MOF is performed by submerging same in a DMF solution containing 4-aminopropylbenzoic acid for 24 hours.
4. The ring opening reaction of the epoxide groups is carried out by adding a dispersion in dimethylformamide (DMF) of MOF UiO-66(Zr) functionalised with amino groups. The container is closed and kept at 100ºC for 24 hours until the reaction occurs completely.

The container thus prepared has a uniform MOF layer of about 0.5 µm on the inner surface of the container. Before starting to use said container, it is convenient to perform washing with ethanol/acetone, and to perform heating at reduced pressure on the open container to remove possible solvent residues or reagents that remain trapped in the pores of the MOF.

In a last embodiment of the invention (Figure 2), the stationary phase having a radial atomic sequence, container-Si-O-Si-(CH₂)₃-NH-C(=O)-(C₆H₄)-COO-Zr-MOF, is obtained by means of four steps: 1) silica surface activation with an alkaline solution, 2) silanisation reaction to generate terminal 3-aminopropyl groups, 3) amidation reaction to generate terminal carboxyl groups, and 4) MOF UiO-66(Zr) growth by means of solvothermal synthesis. The method performed inside the glass container is described below:
1. Container activation is performed by adding a 1 M aqueous NaOH solution for 24 hours at 25ºC, and after appropriate washing with water, a second 1 M HCl solution is added for 30 minutes at 25ºC.
2. Container glass silanisation is performed by adding 3-aminopropylsilane (APTES) that is left to act for 24 hours at 60ºC.
3. The amidation reaction to produce terminal carboxyl groups is carried out by adding to the container, in an inert atmosphere, a triethylamine solution in tetrahydrofuran (THF) and then another 0.04 M terephthaloyl chloride solution in THF. The container is closed and kept at 60ºC for 24 hours until the reaction occurs completely.
4. Finally, the incorporation of MOF UiO-66(Zr) is performed by adding a solution in dimethylformamide of 0.02 M zirconium(IV) chloride and 0.02 M terephthalic acid to the container. The container is closed and kept at 120ºC for 24 hours until the MOF has grown on the inner surface of the container.

The container thus prepared has a uniform MOF layer of about 1 µm on the inner surface of the container. Before starting to use said container, it is convenient to perform washing with dimethylformamide and with ethanol/acetone, and to perform low-pressure heating on the open container to remove possible DMF residues or reagents that remain trapped in the pores of the material.

Figures 6 and 7 show the results obtained for extraction efficiency using the devices of the first and last embodiments of the invention for the analytical determination of eight organic compounds of different natures (PAHs, phenols, a drug, a disinfectant, and a solar panel) at a concentration of 10 ppb in 10 mL of water. The process is very simple, the sample is added to the vial, a time of extraction by means of stirring of 5 minutes is used, and after extraction, the supernatant is discarded, 500 µL of acetonitrile are added to the vial and the desorption step occurs for 5 minutes under vortex stirring. Centrifugation was not required in the entire microextraction method, which ensures the simplicity of the device in the daily use thereof.

## Claims

1. A glass container, **characterised in that** it comprises a coating of formula -Si-O-R-M-MOF covalently bonded to the inner wall thereof in an inverted radial manner, R being an intermediate compound selected from the group consisting of: A) -Si-(CH₂)₃-NH-CH(=O)-(C₆H₄)-COO-; B) -Si-(CH₂)ₙ-NH-CH(=O)-(CH₂)₂-(C₂HN₃)-(CH₂)ₙ-(C₆H₄)-COO-; C) -Si-(CH₂)ₙ-O-CH₂-CH(-OH)-CH₂-NH-(CH₂)ₙ-(C₆H₄)-COO-, or D) -Si-(CH₂)ₙ-S-(CH₂)₂-(CH₂)ₙ-(C₆H₄)-COO-, with an n which can take values between 0 and 6 and where M is a metal dependent on the type of the metal-organic framework (MOF).

2. The glass container according to claim 1, where M is a metal selected from the group consisting of Zr, Ti, Al, Cr, Fe, Mn, Co, Ni, Cu, Zn, Mg, Ca, Sc, Sr.

3. The glass container according to claim 2, where the MOF is selected from the group consisting of UiO-66(Zr), UiO-66(Zr)-NH₂, UiO-66(Zr)-NO₂, MIL-101 (Fe), MIL-101 (Fe)-NH₂, MIL-100(Cr), CIM-80(AI), PCN-250(Fe₂Co), PCN-250(Fe), UiO-67, HKUST-1, DUT-52, DUT-67, or modifications thereof with terminal amino or azido groups.

4. A method of manufacturing the container according to claims 1-3, **characterised by** the chemical modification of the inner surface of the glass after successive activation, silanisation and amidation reactions and/or click chemistry reaction.

5. Use of the container according to claims 1-3 as a thin film microextraction (TFME) device for the pre-concentration of environmental, biological, agri-food samples, etc. in (bio)analytical chemistry.

6. Use of the container according to claims 1-3 for dosing and administering medicines.

7. Use of the container according to claims 1-3 for colouring and flavouring beverages.
